# EUROPEAN PATENT APPLICATION

(11) **EP 4 284 099 A1**
(43) Date of publication of application: **29.11.2023**
(21) Application number: 21920370.0
(22) Date of filing: 25.01.2021
(51) Int. Cl.: H04W 72/12

(54) **MBS SERVICE CONFIGURATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: Novagraaf Technologies
(86) International application number: PCT/CN2021/073675
(87) International publication number: WO 2022/155978

(57) **Abstract**

Provided in the embodiments of the present application are an MBS service configuration method and apparatus, a terminal device, and a network device, the method comprising: a terminal device receives configuration information of an MBS service, the MBS service being transmitted by means of a multicast method, and the configuration information of the MBS service being used for determining at least one of the following: whether the terminal device can receive the MBS service in an RRC_IDLE state and/or an RRC_INACTIVE state; and whether the terminal device needs to implement MBS service feedback.

## Description

### TECHNICAL FIELD

The present disclosure relates to the technical field of mobile communication, and in particular to a configuration method and apparatus for a multicast broadcast service (MBS) service, a terminal device, and a network device.

### BACKGROUND

In a new radio (NR) system, a multicast broadcast service (MBS) service of a multicasting type is supported. In general, the quality of service (QoS) requirement of the MBS service of the multicasting type is relatively high. For example, the MBS service needs to be fed back, and thus a terminal device is required to receive the MBS service of the multicasting type in a state of radio resource control (RRC)_CONNECTED.

However, the terminal device in a state of RRC_INACTIVE or the state of RRC_CONNECTED also needs to receive the MBS service of the multicasting type. It is necessary to clarify how the terminal device in the state of RRC_INACTIVE or the state of RRC_CONNECTED receives the MBS service of the multicasting type.

### SUMMARY OF THE DISCLOSURE

The embodiments of the present disclosure provide a configuration method and apparatus for a multicast broadcast service (MBS) service, a terminal device, and a network device.

A configuration method for a multicast broadcast service (MBS) is provided according to the embodiments of the present disclosure, and the method includes: receiving, by a terminal device, configuration information of the MBS service, the MBS service being transmitted in a multicasting; wherein the configuration information of the MBS service is configured to determine at least one of: whether the terminal device is capable of receiving the MBS service when the terminal device is in a state of radio resource control (RRC)_IDLE and/or in a state of RRCINACTIVE; and whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

A configuration method for the MBS service provided according to the embodiments of the present disclosure, and the method includes: sending, by a network device, configuration information of the MBS service to a terminal device, the MBS service being transmitted in a multicasting; wherein the configuration information of the MBS service is configured to determine at least one of: whether the terminal device is capable of receiving the MBS service when the terminal device is in a state of radio resource control (RRC) IDLE and/or in a state of RRC_INACTIVE; and whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

A configuration apparatus for MBS service is provided according to the embodiments of the present disclosure, which is applied to a terminal device, and the apparatus includes: a receiving unit, configured to receive configuration information of the MBS service, the MBS service being transmitted in a multicasting; wherein the configuration information of the MBS service is configured to determine at least one of: whether the terminal device is capable of receiving the MBS service when the terminal device is in a state of radio resource control (RRC)_IDLE and/or in a state of RRC_INACTIVE; and whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

A configuration apparatus for the MBS service is provided according to the embodiments of the present disclosure, which is applied to a network device, and the apparatus includes: a sending unit, configured to send configuration information of the MBS service to a terminal device, the MBS service being transmitted in a multicasting, wherein the configuration information of the MBS service is configured to determine at least one of: whether the terminal device is capable of receiving the MBS service when the terminal device is in a state of radio resource control (RRC) IDLE and/or in a state of RRC_INACTIVE; and whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

A terminal device according to an embodiment of the present disclosure includes a processor and a memory. The memory is configured to store computer programs, and the processor is configured to call and run the computer programs stored in the memory to execute the above configuration method for MBS service.

A network device provided by the according to the embodiments of the present disclosure includes a processor and a memory. The memory is configured to store computer programs, and the processor is configured to call and run the computer programs stored in the memory to execute the above configuration method for MBS service.

A chip provided by the according to the embodiments of the present disclosure is configured to realize the above configuration method for MBS service.

The chip includes: a processor for calling and running computer programs from a memory to enable a device installed with the chip to execute the above configuration method for MBS service.

A computer-readable storage medium provided by the embodiment of the according to the embodiments of the present disclosure is configured to store computer programs that enable a computer to execute the above configuration method for MBS service.

A computer program product provided by the embodiment of the according to the embodiments of the present disclosure includes computer program instructions, which enable a computer to execute the above configuration method for MBS service.

A computer program provided by the according to the embodiments of the present disclosure, when running on a computer, enables the computer to execute the above configuration method for MBS service.

With the technical solutions as described above, the terminal device receives the configuration information of the MBS service, and the configuration information of the MBS service is configured to constrain whether the terminal device is capable of receiving the MBS service after the terminal device enters the state of RRC_IDLE or the state of RRC_INACTIVE, and whether it is necessary to provide feedback for the MBS service, thereby making it possible for the terminal device in the state of RRC_IDLE or in the state of RRC_INACTIVE to receive the MBS service of a multicasting type.

### BRIEF DESCRIPTION OF THE DRAWINGS

The drawings described herein are intended to provide further understanding of the present disclosure and constitute a part of the present disclosure. The schematic embodiments and descriptions of the present disclosure are intended to illustrate the present disclosure, and do not contribute to any improper limitations of the present disclosure.
FIG. 1 is a schematic diagram of a communication system architecture according to an embodiment of the present disclosure.
FIG. 2 is a flowchart diagram of a configuration method for a multicast broadcast service (MBS) service according to an embodiment of the present disclosure.
FIG. 3 is a structural schematic diagram of a configuration apparatus for the MBS service according to an embodiment of the present disclosure.
FIG. 4 is another structural schematic diagram of a configuration apparatus for the MBS service according to an embodiment of the present disclosure.
FIG. 5 is a structural schematic diagram of a communication device according to an embodiment of the present disclosure.
FIG. 6 is a structural schematic diagram of a chip according to an embodiment of the present disclosure.
FIG. 7 is a schematic block diagram of a communication system according to an embodiment of the present disclosure.

### DESCRICATION

The technical solutions in the embodiments of the present disclosure will be described below in conjunction with the accompanying drawings in the embodiments of the present disclosure. Obviously, the embodiments described are a part of the embodiments of the present disclosure, and not all of them. With respect to the embodiments in the present disclosure, all other embodiments obtained by those skilled in the art without making creative labor fall within the scope of the present disclosure.

The embodiments of the present disclosure may be applied to various communication systems, such as a Long Term Evolution (LTE) system, a LTE Frequency Division Duplex (FDD) system, a LTE Time Division Duplex (TDD) system, a 5G communication system, or communication systems in future, etc.

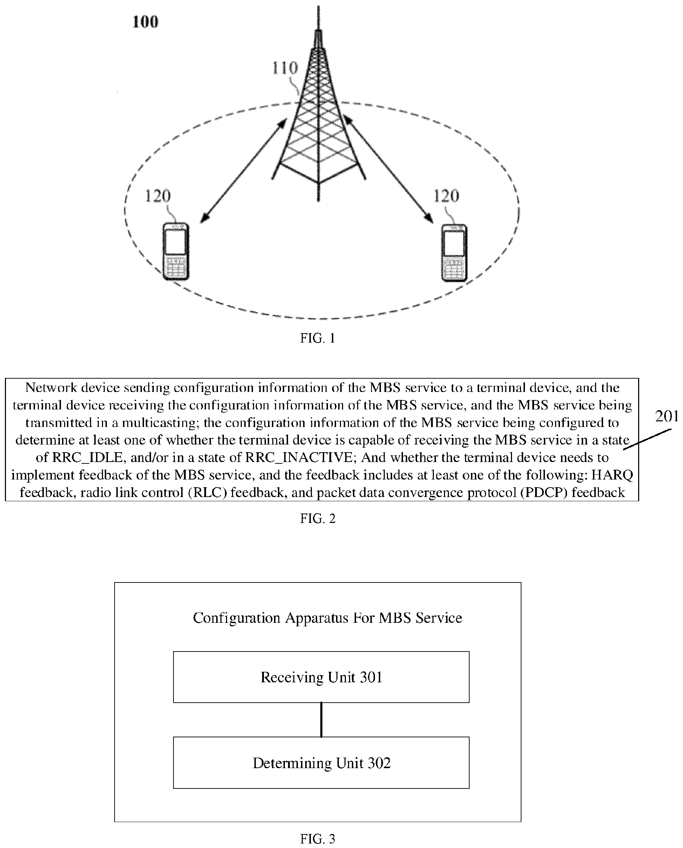

Exemplarily, a communication system 100 applied in embodiments of the present disclosure is shown in FIG. 1. The communication system 100 may include a network device 110, and the network device 110 may be a device that communicates with a terminal 120 (or referred to as a communication terminal or terminal). The network device 110 may provide communication coverage for a specific geographic region and may communicate with terminal devices located within the coverage region. In some embodiments, the network device 110 may be an evolutional base station (Evolutional Node B, eNB, or eNodeB) in the LTE system, or a wireless controller in cloud radio access network (CRAN). Alternatively, the network device 110 may be a mobile switching center, a relay station, an access point, an in-vehicle device, a wearable device, a hub, a switch, a bridge, a router, a network side device in 5G network, a network device in the future communication systems, etc.

The communication system 100 further includes at least one terminal 120 located within the coverage region of the network device 110. The "terminal" used herein may include, but is not limited to, an apparatus that receives/sends communication signals and/or an internet of things (IoT) device, which is connected via wired lines, such as public switched telephone networks (PSTN), digital subscriber line (DSL), digital cable, or direct cable; and/or is connected via another data connection/network; and/or is connected via wireless interface, such as cellular network, wireless local area network (WLAN), digital television network such as digital video broadcasting handheld (DVB-H) network, satellite network, an automated mapping/facilities management (AM-FM) broadcast transmitter; and/or is connected via another terminal. The terminal set to communicate through a wireless interface may be referred to as a wireless communication terminal, a wireless terminal, or a mobile terminal. An example of the mobile terminal includes, but is not limited to, a satellite phone or a cellular phone, a personal communications system (PCS) terminal that may combine cellular radiotelephony with data processing, facsimile, and data communication capabilities, a Personal Digital Assistant including a radiotelephone, a pager, an Internet/Intranet access, a Web browser, a memo pad, a calendar, and/or a global positioning system (GPS) receiver, conventional laptop and/or handheld receivers, or other electronic apparatuses including radiotelephone transceivers. The terminal may be referred to an access terminal, a user equipment (UE), a user unit, a user station, a mobile station, a mobile platform, a remote station, a remote terminal, a mobile device, a user terminal, a terminal, a wireless communication device, a user agent, a user apparatus, etc. The access terminal may be a cellular telephone, a cordless telephone, a session initiation protocol (SIP) telephone, a wireless local loop (WLL) station, a personal digital assistant (PDA) device, a handheld device with wireless communication capabilities, a computing device or other processing devices connected to a wireless modem, an in-vehicle device, a wearable device, a terminal in 5G network, a terminal in future evolved public land mobile network (PLMN), etc.

In some embodiments, device to device (D2D) communication may be performed among the terminals 120.

In some embodiments, the 5G communication system or the 5G network may be referred to as a new radio (NR) system or NR network.

FIG. 1 exemplarily illustrates one network device and two terminals. In some embodiments, the communication system 100 may include multiple network devices and other numbers of terminal devices may be included within the coverage region of each network device, which are not limited in the embodiments of the present disclosure.

In some embodiments, the communication system 100 may further include other network entities such as a network controller, a mobile management entity, etc., which are not limited in the embodiments of the present disclosure.

It should be understood that devices with communication functions in the network/system in the embodiments of the present disclosure may be referred to as communication devices. Taking the communication system 100 illustrated in FIG. 1 as an example, the communication devices may include the network device 110 and terminal 120 with communication functions, and the network device 110 and terminal 120 may be specific devices as described above, which will not be described herein. The communication devices may further include other devices in the communication system 100, such as a network controller, a mobile management entity, and other network entities, which are not limited in the embodiments of the present disclosure.

It should be understood that the terms "system" and "network" may be used interchangeably in this document. The term "and/or" in this document is only a description of an association relationship of associated objects, indicating that three relationships may exist, for example, A and/or B, which may indicate: the existence of A alone, the existence of both A and B, and the existence of B alone. In addition, the character "/" generally indicates that the front and rear associated objects are in an "or" relationship.

In order to understand the technical solutions in the embodiments of the present disclosure, the technical solutions of the present disclosure are detailed below through specific embodiments.

With people's pursuit of speed, delay, high-speed mobility, energy efficiency, and the diversity and complexity of services in future life, the 3rd generation partnership project (3GPP) international standards organization began to develop 5G. The main application scenarios of the 5G may be enhanced mobile broadband (eMBB), ultra-Reliable low-latency communications (URLLC), and massive machine-type communications (mMTC).

On one hand, the eMBB still aims at users' access to multimedia content, services, and data, and the requirement of the eMBB is growing rapidly. On the other hand, since the eMBB may be deployed in different scenarios such as indoor, urban, rural, etc., resulting in a large difference in capabilities and requirements, thus it cannot be generalized, and must be detailed in conjunction with specific deployment scenarios of the eMBB. Typical applications of the URLLC include industrial automation, power automation, telemedicine operation (surgery), traffic safety assurance, etc. Typical characteristics of the mMTC include high connection density, small amount of data, delay insensitive services, low cost and long service life of modules, etc.

In the early deployment of NR, complete NR coverage is difficult to be obtained, so typical network coverage is a coverage mode of wide area LTE and a coverage mode of NR island. Moreover, a large number of LTEs are deployed below 6GHz, and there is very little spectrum available for 5G below 6GHz. Therefore, spectral applications above 6GHz needs to be studied for the NR, with limited high-frequency coverage and fast signal fading. At the same time, in order to protect mobile operators' early investment in THE LTE, a tight coupling working mode between LTE and NR is proposed.

### Radio resource control (RRC)

In order to reduce radio signaling, and quickly restore wireless connections and data services, there defines a new RRC state in 5G, namely, a state of RRC_INACTIVE. The stat of RRC_INACTIVE is different from a state of RRC_IDLE and a state of RRC_ACTIVE.
1) RRC_IDLE (referred to as an idle state for short): mobility is based on the UE's cell selection and reselection, paging is initiated by a core network (CN), and a paging area is configured by the CN. There is no UE context or RRC connection at the base station side.
2) RRC_CONNECTED (referred to as a connected state for short): there is an RRC connection, and there is a UE context at the base station side and the UE side. The location of the UE which is specific to a cell level is known by the network side. The mobility is controlled by the network side. Unicast data may be transmitted between the UE and the base station.
3) RRC_INACTIVE (referred to as inactive state for short): the mobility is based on the UE's cell selection and reselection, there is a connection between the CN and the NR, the context of the UE is in a certain base station, and the paging is triggered by the radio access network (RAN). The paging area based on the RAN is managed by the RAN, the location of the UE known to the network side is based on a paging area level of the RAN.

### Multimedia broadcast multicast service (MBMS)

The MBMS is a technology that transmits data from one data source to a plurality of terminal devices by means of sharing network resources. The technology may effectively utilize the network resources while providing multimedia services, thereby realizing broadcasting and multicasting of the multimedia service at a relatively high rate (such as 256 kbps).

Due to a low spectral efficiency of the MBMS, it is not sufficient to effectively carry and support the operation of mobile TV service. Therefore, in the LTE, the 3GPP explicitly proposes to enhance the support capability for downlink high-speed of the MBMS service, and determines the design requirements on a physical layer and an air interface.

3GPP R9 introduces the evolved MBMS (eMBMMS) into the LTE. The eMBMS proposes a concept of single frequency network (SFN), namely, multimedia broadcast multicast service single frequency network (MBSFN). The MBSFN uses a unified frequency to send service data simultaneously across all cells, but ensures synchronization among the cells. This greatly improve an overall signal-to-noise ratio distribution of the cells, and the spectral efficiency may also be significantly improved accordingly. The eMBMS implements broadcasting and multicasting of a service based on an IP multicast protocol.

In the LTE or enhanced LTE-Advanced (LTE-A), the MBMS only has a broadcast bearer mode, but no multicast bearer mode. In addition, the reception of the MBMS service is applicable to a terminal device in an idle state or a connected state.

A concept of single cell point to multipoint (SC-PTM) is introduced in the 3GPP R13, and the SC-PTM is based on a network architecture of the MBMS.

A new logical channel is introduced by the MBMS, which includes a single cell multicast control channel (SC-MCCH) and a single cell multicast transport channel (SC-MTCH). The SC-MCCH and the SC-MTCH are mapped to a downlink shared channel (DL-SCH). Further, the DL-SCH is mapped to a physical downlink shared channel (PDSCH). The SC-MCCH and the SC-MTCH belong to logical channels, DL-SCH belongs to a transmission channel, and the PDSCH belongs to a physical channel. The SC-MCCH and the SC-MTCH cannot support an operation of hybrid automatic repeat request (HARQ).

A new system information block (SIB) type is introduced by the MBMS, namely, SIB20. Specifically, configuration information of the SC-MCCH is transmitted through the SIB20. A cell has only one SC-MCCH. The configuration information of the SC-MCCH includes a modification period of the SC-MCCH, a repetition period of the SC-MCCH, a wireless frame and a subframe for scheduling the SC-MCCH, and so on. Furthermore, 1) the modification period of the SC-MCCH has a boundary, meeting SFN mod m=0, where SFN represents a system frame number of the boundary and m is the modification period of the SC-MCCH (i.e. sc-mcch-Modification Period) configured in the SIB20. 2) The wireless frame for scheduling the SC-MCCH meets the following requirement: SFN mod mcch-Repetition Period=mcch-Offset, where SFN represents a system frame number of the wireless frame, mcch-Repetition Period represents the repetition period of the SC-MCCH, and mcch-Offset represents a offset of the SC-MCCH. 3) The subframe for scheduling the SC-MCCH is indicated by sc-mcch-Subframe.

The SC-MCCH is scheduled through a physical downlink control channel (PDCCH). On one hand, a new radio network temporary identity (RNTI), namely, single cell RNTI (SC-RNTI), is introduced to identify the PDCCH configured to schedule the SC-MCCH (such as SC-MCCH PDCCH). In some embodiments, a fixed value of the SC-RNTI is FFFC. On the other hand, a new RNTI, namely, single cell Notification RNTI (SC-N-RNTI), is introduced to identify the PDCCH configured to indicate a change notification of the SC-MCCH (such as notifying the PDCCH). In some embodiments, a fixed value of the SC-N-RNTI is FFFB. Furthermore, one of 8 bits of downlink control information (DCI) 1C may be configured to indicate the change notification. In the LTE, the configuration information of the SC-PTM is based on the SC-MCCH configured in SIB20, and then the SC-MCCH is configured with the SC-MTCH which is configured for transmitting the service data.

Specifically the SC-MCCH only transmits one message (SCPTM Configuration), and the message is configured to configure the configuration information of the SC-PTM. The configuration information of the SC-PTM includes temporary mobile group identity (TMGI), session ID, group RNTI (G-RNTI), configuration information of discontinuous receipt (DRX), service information of the SC-PTM of adjacent cells, and so on. It should be noted that, the SC-PTM in the R13 does not support the robust header compression (ROHC).

The downlink discontinuous reception of the SC-PTM is controlled by the following parameters: onDurationTimerSCPTM, drx-InactivityTimerSCPTM, SC-MTCH-SchedulingCycle, and SC-MTCH-Scheduling Offset.

When [(SFN * 10) + subframe number] modulo (SC-MTCH-Scheduling Cycle) = SC-MTCH-Scheduling Offset, a timer onDurationTimerSCPTM is started.

When a downlink PDCCH scheduling is received, a timer drxInactivityTimerSCPTM is started.

Only when the timer onDurationTimerSCPTM or drxInactivityTimerSCPTM is running, a service of the downlink SC-PTM is received.

A concept of the MBMS service continuity based on SIB 15, namely, "SIB 15+MBMSInterestIndication", is adopted by the SC-PTM service continuity. Service continuity of an idle terminal device is based on a concept of frequency priority.

According to the above description, the configuration of the SC-PTM is SC-MCCH configured based on the SIB20, then the SC-MTCH is configured based on the SC-MCCH, and SC-MTCH is configured for transmitting the service data.

It should be noted that the MBMS service in the above embodiments includes but are not limited to a multicast service, a MBS service, etc. The embodiments of the present disclosure illustrate the MBS service as an example, and description of "MBS service" may also be replaced by "the multicast service" or "the MBMS service".

In a NR system, service requirements of a multicasting type and a broadcasting type need to be supported in many scenarios, such as the internet of vehicles, industrial internet, etc. Therefore, it is necessary to introduce the MBS service of the multicasting type and the broadcasting type in the NR. It should be noted that, the MBS service of the multicasting type refers to a MBS service transmitted in a multicasting. The MBS service of the broadcasting type refers to MBS service transmitted in a broadcasting.

In the NR system, for the MBS service of the broadcasting type, the terminal device can receive the MBS service of the broadcasting type when in RRC_IDLE or RRC_INACTIVE or in RRC_CONNECTED.

In the NR system, for the MBS service of the multicasting type, the MBS service is sent to all terminal devices in a certain group. The network side sends AS layer configuration information of the MBS service to a terminal device through RRC dedicated signaling. The terminal device receives the PDCCH scrambled by group radio network temporary identifier (G-RNTI) based on the AS layer configuration information when in the state of RRC_CONNECTED, and then the terminal device receives data of the MBS service of the multicasting type based on scheduling information of the PDCCH. Generally, the MSB service of the multicasting type has high QoS requirement, for example, a HARQ feedback of the physical layer is needed, which requires the terminal device to be in the state of RRC_CONNECTED. However, the MBS service with low QoS requirement may also be sent in a multicasting, that is, a terminal device in the state of RRC_IDLE or in the state of RRC_INACTIVE may also receive the MSB service of the multicasting type. It is necessary to clarify how the terminal device in the state of RRC_INACTIVE or the state of RRC_CONNECTED receives the MBS service of the multicasting type. Therefore, the following technical solutions according to the embodiments of the present disclosure are provided. The technical solutions according to the embodiments of the present disclosure may also be applied to the MBS service with the low QoS requirement, which is not limited, but also to the MBS service with high QoS requirement.

In the technical solutions according to the embodiments of the present disclosure, a new SIB (called a first SIB) is defined. The first SIB includes the configuration information of a first MCCH. Here, the first MCCH is a control channel of the MBS service. In other words, the first SIB is configured to configure configuration information of the control channel of the NR MBS. In some embodiments, the control channel of the NR MBS may also be called as NR MCCH (that is, the first MCCH).

Further, the first MCCH is configured to carry a first signaling. A name of the first signaling is not limited in the embodiments of the present disclosure. For example, the first signaling is signaling A, and the first signaling includes configuration information of at least one first MTCH. Here, the first MTCH is a service channel (also called as a data channel or a transmission channel) of the MBS service, and the first MTCH is configured for transmitting data of the MBS service (such as service data of the NR MBS). In other words, the first MCCH is configured to configure configuration information of the service channel of the NR MBS. In some embodiments, the service channel of the NR MBS may also be called as NR MTCH (i.e. the first MTCH).

Specifically, the first signaling is configured to configure the service channel of the NR MBS, service information corresponding to the service channel, and scheduling information corresponding to the service channel. Furthermore, the service information corresponding to the service channel may be identification information of the service which is identified by TMGI, session ID, and so on. The scheduling information corresponding to the service channel may be RNTI used when the MBS service data corresponding to the service channel is scheduled, configuration information of G-RNTI or DRX, etc.

It should be noted that, the transmission of the first MCCH and the first MTCH is scheduled based on the PDCCH. The RNTI used by the PDCCH for scheduling the first MCCH uses a unique identifier, namely, a fixed value, across the entire network. The RNTI used by the PDCCH for scheduling the first MTCH is configured through the first MCCH.

It should be noted that, names of the first SIB, the first MCCH, and the first MTCH are not limited in the embodiments of the present disclosure. For ease of description, the first SIB may also be referred to as the SIB, the first MCCH may also be referred to as the MCCH, and the first MTCH may also be referred to as the MTCH. The SIB configures PDCCH for scheduling MCCH (i.e. MCCH PDCCH) and notifies the PDCCH, and the DCI carried by MCCH PDCCH is configured to schedule the PDSCH for transmitting the MCCH (i.e. MCCH PDSCH). Furthermore, the MCCH configures M PDCCHs for scheduling the MTCH (namely, MTCH 1 PDCCH, MTCH 2 PDCCH, ..., MTCH M PDCCH). The DCI carried by MTCH n PDCCH is configured to schedule the PDSCH for transmitting the MTCH n (namely, MTCH n PDSCH), and n is an integer greater than or equal to 1 and less than or equal to M. The MCCH and the MTCH are mapped onto the DL-SCH. Further, the DL-SCH is mapped onto the PDSCH, where the MCCH and the MTCH belong to logical channels, the DL-SCH belongs to the transmission channel, and the PDSCH belongs to the physical channel.

FIG. 2 is a flowchart diagram of a configuration method for a multicast broadcast service (MBS) service according to an embodiment of the present disclosure. As shown in FIG. 2, the configuration method of the MBS service includes the following operations.

In an operation 201, a network device sends configuration information of the MBS service to a terminal device, and the terminal device receives the configuration information of the MBS service. The MBS service is transmitted in a multicasting. The configuration information of the MBS service is configured to determine at least one of: whether the terminal device is capable of receiving the MBS service when the terminal device is in the state of RRC_IDLE and/or in the state of RRC_INACTIVE, and whether the terminal device needs to perform a feedback for the MBS service, and the feedback includes at least one of: a HARQ feedback, a radio link control (RLC) feedback, and a packet data convergence protocol (PDCP) feedback.

In the embodiments of the present disclosure, the network device may be a base station. In some embodiments, the network device is a base station that sends the MSB service in the multicasting.

In the embodiments of the present disclosure, the MSB service is transmitted in the multicasting. In other words, the MSB service is of a multicasting type. Specifically, after receiving the MBS service from the core network on the shared tunnel, the base station may send the MSB service to all terminal devices in one group through an air interface. Here, the base station may send the MSB service to all terminal devices in one group in a point-to-point (PTP) mode and/or a point to many (PTM) mode. For example, one group includes a terminal device 1, a terminal device 2, and a terminal device 3. The base station may send the MBS service to the terminal device 1 in the PTP mode, send the MBS service to the terminal device 2 in the PTP mode, and send the MBS service to the terminal device 3 in the PTP mode. Alternatively, the base station may send the MBS service to terminal device 1 in the PTP mode, and send the MBS service to the terminal device 2 and the terminal device 3 in the PTM mode. Alternatively, the base station may send the MBS service to the terminal device 1, the terminal device 2, and the terminal device 3 in the PTM mode.

In the embodiments of the present disclosure, the network device sends the configuration information of the MBS service to the terminal device, and the terminal device receives the configuration information of the MBS service. In some embodiments, the configuration information of the MBS service is carried in first RRC dedicated signaling. In an embodiment, the first RRC dedicated signaling is an RRC reconfiguration message, that is, the configuration information of the MBS service is carried in the RRC reconfiguration message. In another embodiment, the first RRC dedicated signaling is a RRC release message, that is, the configuration information of the MBS service is carried in the RRC release message.

In the embodiments of the present disclosure, the configuration information of the MBS service is configured to determine at least one of the following.

Whether the terminal device is capable of receiving the MBS service when the terminal device is in a state of RRC_IDLE and/or a state of RRC_INACTIVE.

Whether the terminal device needs to perform the feedback for the MBS service, wherein the feedback includes at least one of: the HARQ feedback, the RLC feedback, and the PDCP feedback.

Here, the above contents may be explicitly indicated by an indicator in the configuration information of the MBS service. Alternatively, the above contents may be implicitly indicated by whether configuration information related to the feedback is configured in the configuration information of the MBS service. Below description is illustrated.

### Explicit indication

The configuration information of the MBS service includes first indication information configured to indicate at least one of whether the terminal device is capable of receiving the MBS service when the terminal device is in a state of RRC_IDLE and/or a state of RRC_INACTIVE, and whether the terminal device needs to implement the feedback on the MBS service, where the feedback includes at least one of: the HARQ feedback, the RLC feedback, and the PDCP feedback.

In an example, the first indication information is 1-bit indication information. A value of the 1-bit indication information is 1 (or 0), configured to indicate at least one of: the terminal device is capable of receiving the MBS service when the terminal device is in the state of RRC_IDLE and/or the state of RRC_INACTIVE, and the terminal device needs to perform the feedback for the MBS service, where the feedback includes at least one of: the HARQ feedback, the RLC feedback, and the PDCP feedback. A value of the 1-bit indication information is 0 (or 1), configured to indicate at least one of: the terminal device is not capable of receiving the MBS service when the terminal device is in the state of RRC_IDLE and/or the state of RRC_INACTIVE, and the terminal device does not need to perform the feedback for the MBS service, where the feedback includes at least one of: the HARQ feedback, the RLC feedback, and the PDCP feedback.

### Implicit indication

If the configuration information of the MBS service does not include second indication information, the terminal device determines at least one of the following: the terminal device is not capable of receiving the MBS service when the terminal device is in a state of RRC_IDLE and/or a state of RRC_INACTIVE, and the terminal device does not need to perform the feedback for the MBS service.

If the configuration information of the MBS service includes the second indication information, the terminal device determines at least one of the following: the terminal device is capable of receiving the MBS service when the terminal device is in the state of RRC_IDLE and/or the state of RRC_INACTIVE, and the terminal device needs to perform the feedback for the MBS service.

The second indication information is configured to indicate a feedback resource of the MBS service, and the feedback includes at least one of: the HARQ feedback, the RLC feedback, and the PDCP feedback.

In some embodiments of the present disclosure, the configuration information of the MBS service includes second indication information configured to indicate the feedback resource of the MBS service. The feedback resource is configured for the terminal device to transmit feedback information of the MBS service when the terminal device is in the state of RRC_CONNECTED, the state of RRC_INACTIVE, or the state of RRC_IDLE. Here, the feedback information includes at least one of: HARQ feedback information, RLC feedback information, and PDCP feedback information.

It should be noted that, for the HARQ feedback, the corresponding feedback information is the HARQ feedback information. For the RLC feedback, the corresponding feedback information is the RLC feedback information. For the PDCP feedback, the corresponding feedback information is the PDCP feedback information.

It should be noted that, the feedback of the MBS service refers to the feedback regarding to a reception of data of the MBS service at the terminal device . The reception includes a correct reception, an incorrect reception, etc.

In the embodiments of the present disclosure, no matter the terminal device is in the state of RRC_CONNECTED, the state of RRC_IDLE, or the state of RRC_INACTIVE, the feedback resource indicated by the second indication information may be configured for the feedback of the MBS service.

In the embodiments of the present disclosure, the feedback resource indicated by the second indication information is a first PUCCH resource of at least one physical uplink control channel (PUCCH) resource. In some embodiments, each of the at least one PUCCH resource has an index, and the second indication information is an index of the first PUCCH resource. The terminal device may determine the specific PUCCH resource configured for the feedback of the MBS service according to the index of the first PUCCH resource.

In some embodiments of the present disclosure, the terminal device receives configuration information of the at least one PUCCH resource. Here, the at least one PUCCH resource is configured for the feedback of the MBS service of the multicasting type. The terminal device may determine a specific PUCCH resource configured for the feedback of the MBS service based on the second indication information and the configuration information of the at least one PUCCH resource.

The at least one PUCCH resource obtained from the above embodiments may be implemented in the following modes.

Mode A, the at least one PUCCH resource is at least one PUCCH resource on an uplink common band width part (BWP).

Mode B, the at least one PUCCH resource is at least one PUCCH resource on an uplink dedicated BWP.

Here, the uplink dedicated BWP refers to an uplink BWP dedicated to the MBS service.

Mode C, the at least one PUCCH resource is at least one PUCCH resource on the uplink initial BWP (UL initial BWP).

In some embodiments, the configuration information of the at least one PUCCH resource is carried in the system broadcast information or MCCH signaling.

In some embodiments of the present disclosure, if the terminal device is capable of receiving the MBS service of the multicasting type when in the state of RRC_IDLE or the state of RRC_INACTIVE, the network device sends third indication information to the terminal device, and the terminal device receives the third indication information. The third indication information is configured to indicate the terminal device to receive a first serving cell and/or a first BWP used by the MBS service after the terminal device enters the state of RRC_IDLE or the state of RRC-INACTIVE.

In some embodiments, the third indication information is carried in a second RRC dedicated signaling. In an example, the second RRC dedicated signaling is an RRC release message, that is, the third indication information is carried in the RRC release message.

In some embodiments, the third indication information includes an index of the first serving cell and/or an index of the first BWP. The terminal device may determine the first serving cell and/or the first BWP according to the index of the first serving cell and/or the index of the first BWP, and receive the MBS service on the first serving cell and/or the first BWP.

In some embodiments, the second RRC dedicated signaling further carries configuration information of the first serving cell and/or configuration information of the first BWP.

In the above embodiments, the first serving cell indicated by the third indication information is the same as a cell in which the terminal device receives the MBS service when in the state of RRC_CONNECTED. Alternatively, the first serving cell indicated by the third indication information is different from a cell in which the terminal device receives the MBS service when in the state of RRC_CONNECTED.

In the above embodiments, the first BWP indicated by the third indication information is the same as the BWP used by the terminal device to receive the MBS service when in the state of RRC_CONNECTED. Alternatively, the first BWP indicated by the third indication information is different from the BWP used by the terminal device to receive the MBS service when in the state of RRC_CONNECTED.

In some embodiments, if the network device does not configure the third indication information, or the terminal device does not obtain the third indication information, the terminal device receives the MBS service in a default cell and/or a default BWP after entering the state of RRC_IDLE or the state of RRC_INACTIVE. In some embodiments, the default cell is a PCell or a SPCell. The default BWP is a downlink initial BWP (DL initial BWP).

In the embodiments of the present disclosure, if the terminal device continues to receive the MBS service after entering the state of RRC_IDLE or the state of RRC_INACTIVE, there are the following cases.

In a first case, all secondary cells (SCells) are in a deactivated state, a suspended state, a stored state, or a released state. The all SCells include SCells at a master cell group (MCG) and/or SCells at a secondary cell group (SCG).

In a second case, all cells at the SCG are in the deactivated state, the suspended state, the stored state, or the released state, and all cells at the SCG include a primary and secondary cell (PSCell) and a SCell at the SCG.

It should be noted that, a serving cell of the terminal device includes MCG and SCG. The MCG is a cell group at MN, and the SCG is a cell group at SN. Furthermore, the MCG includes a PCell and a plurality of SCells. The SCG includes a PSCell and a plurality of SCells.

Here, the terminal device receive the MBS service on the PCell by default after entering the state of RRC_IDLE or the state of RRC_INACTIVE. Therefore, PCell needs to be in an active state, and Other cells besides the PCell are in the deactivated state, the suspended state, the stored state, or the released state, so as to save power. The other cells besides the PCell include a SCell at the MCG, and a PSCell and a SCell at the SCG. It may be seen that all SCells or SCGs may be in the deactivated state, the suspended state, the stored state, or the released state.

In a third case, a cell configured with a MBS resource is in an active state, and a cell configured with no MBS resource is in a deactivated state, a suspended state, a stored state, or a released state. The MBS resource includes a service resource for transmitting the MBS service and/or a feedback resource for transmitting feedback information of the MBS service.

Here, for the cell configured with the MBS resource, the terminal device is capable of receiving the MBS service and/or perform the feedback for the MBS service on the cell based on the MBS resource, and thus the cell needs to be in the active state. For a cell configured with no MBS resource, the terminal device is not capable of receiving the MBS service and/or does not perform the feedback for the MBS service on the cell, and thus the cell may be in the deactivated state, or suspended state, or stored state, or released state, thereby saving power.

It should be noted that, the cell is in the active state, which may be understood that the terminal device performs PDCCH monitoring on the cell. The cell is in the deactivated state, the suspended state, the stored state, or the released state, which may be understood that the terminal device does not perform PDCCH monitoring on the cell.

In some embodiments of the present disclosure, if the terminal device determines that the terminal device is capable of receiving the MBS service when the terminal device is in the state of RRC_IDLE or the state of RRC_INACTIVE based on the configuration information of the MBS service, the terminal device continues to monitor the MBS PDCCH after entering the state of RRC_IDLE or the state of RRC_INACTIVE. The MBS PDCCH carries scheduling information of the MBS PDCCH which is configured for transmitting the MSB service. In an example, the MBS PDCCH is scrambled by the G-RNTI. Alternatively, in another example, the MBS PDCCH is scrambled by a cell radio network temporary identifier (C-RNTI).

The technical solutions according to the embodiments of the present disclosure specifies that, after entering the state of RRC_IDLE or the state of RRC_INACTIVE, the terminal device continues to receive a feedback constraint, feedback resource configuration, dedicated wireless resource configuration, and state management of the MBS service, thereby making it possible for the terminal device in the state of RRC_IDLE or the state of RRC_INACTIVE to continue to receive MSB service of the multicasting type.

FIG. 3 is a structural schematic diagram of a configuration apparatus for the MBS service according to an embodiment of the present disclosure, which is applied to a terminal device. As shown in FIG. 3, the configuration apparatus for the MBS service includes the following:

A receiving unit 301 is configured to receive the configuration information of the MBS service. The MBS service is transmitted in a multicasting. The configuration information of the MBS service is configured to determine at least one of whether the terminal device is capable of receiving the MBS service when the terminal device is in a state of RRC_IDLE and/or a state of RRC_INACTIVE, and whether the terminal device needs to perform the feedback for the MBS service, and the feedback includes at least one of: the HARQ feedback, the RLC feedback, and the PDCP feedback.

In some embodiments, the configuration information of the MBS service includes first indication information which is configured to indicate at least one of whether the terminal device is capable of receiving the MBS service when the terminal device is in a state of RRC_IDLE and/or a state of RRC_INACTIVE, and whether the terminal device needs to perform the feedback for the MBS service, and the feedback includes at least one of: the HARQ feedback, the RLC feedback, and the PDCP feedback.

In some embodiments, the apparatus further includes a determining unit 302 configured for determining at least one of that the terminal device is not capable of receiving the MBS service when the terminal device is in the state of RRC_IDLE and/or the state of RRC_INACTIVE; and that the terminal device does not need to perform the feedback for the MBS service, if the configuration information of the MBS service does not include the second indication information. If the configuration information of the MBS service includes the second indication information, the determining unit 302 is configured to determine at least one of: that the terminal device is capable of receiving the MBS service when the terminal device is in the state of RRC_IDLE and/or the state of RRC_INACTIVE; and that the terminal device needs to perform the feedback for the MBS service.

The second indication information is configured to indicate a feedback resource of the MBS service, and the feedback includes at least one of: the HARQ feedback, the RLC feedback, and the PDCP feedback.

In some embodiments, the configuration information of the MBS service includes second indication information configured to indicate a feedback resource of the MBS service. The feedback resource is configured for the terminal device to transmit the feedback information of the MBS service in the state of RRC_CONNECTED, the state of RRC_INACTIVE, or the state of RRC_IDLE.

In some embodiments, the feedback resource is the first PUCCH resource of the at least one PUCCH resource.

In some embodiments, each of the at least one PUCCH resource has an index, and the second indication information is an index of the first PUCCH resource.

In some embodiments, the at least one PUCCH resource is the at least one PUCCH resource on the uplink common BWP. Alternatively, the at least one PUCCH resource is at least one PUCCH resource on the uplink dedicated BWP.

In some embodiments, the at least one PUCCH resource is at least one PUCCH resource on the uplink initial BWP.

In some embodiments, the configuration information of the at least one PUCCH resource is carried in the system broadcast information or the MCCH signaling.

In some embodiments, the configuration information of the MBS service is carried in the first RRC dedicated signaling.

In some embodiments, the receiving unit 301 is further configured to receive third indication information, and the third indication information is configured to indicate the terminal device to receive the first serving cell and/or the first BWP used by the MBS service after the terminal device enters the state of RRC_IDLE or the state of RRC_INACTIVE.

In some embodiments, the third indication information includes an index of the first serving cell and/or the index of the first BWP.

In some embodiments, the first serving cell indicated by the third indication information is the same as a cell in which the terminal device receives the MBS service when in the state of RRC_CONNECTED. Alternatively, the first serving cell indicated by the third indication information is different from a cell in which the terminal device receives the MBS service when in the state of RRC_CONNECTED.

In some embodiments, the first BWP indicated by the third indication information is the same as the BWP used by the terminal device to receive the MBS service when the terminal device is in the state of RRC_CONNECTED. Alternatively, the first BWP indicated by the third indication information is different from the BWP used by the terminal device to receive the MBS service when the terminal device is in the state of RRC_CONNECTED.

In some embodiments, the third indication information is carried in a second RRC dedicated signaling.

In some embodiments, if the terminal device receives the MBS service after entering the state of RRC_IDLE or the state of RRC_INACTIVE, all SCells are in a deactivated state, a suspended state, a stored state, or a released state. The all SCells include SCells at the MCG and/or SCells at the SCG. Alternatively, all cells at the SCG are in the deactivated state, the suspended state, the stored state, or the released state, and all cells at the SCG include a PSCell and a SCell at the SCG.

In some embodiments, if the terminal device receives the MBS service after entering the state of RRC_IDLE or the state of RRC_INACTIVE, a cell configured with a MBS resource is in the active state, and a cell configured with no MBS resource is in a deactivated state, a suspended state, a stored state, or a released state;

The MBS resource includes a service resource for transmitting the MBS service and/or a feedback resource for transmitting feedback information of the MBS service.

In some embodiments, the apparatus further includes a monitoring unit (not shown), which is configured to continue to monitor the MBS PDCCH after the terminal device enters the state of RRC_IDLE or the state of RRC_INACTIVE, if the terminal device determines that the terminal device is capable of receiving the MBS service when the terminal device is in the state of RRC_IDLE or the state of RRC_INACTIVE based on the configuration information of the MBS service. The MBS PDCCH carries scheduling information of the MBS PDCCH configured for transmitting the MSB service.

In some embodiments, the MBS PDCCH is scrambled by the G-RNTI. Alternatively, the MBS PDCCH is scrambled through the C-RNTI.

It should be understood by those skilled in the art that, the relevant description of configuration apparatus for the MBS service in the embodiments of the present disclosure may refer to the relevant description of the configuration method of the MBS service in the embodiments of the present disclosure.

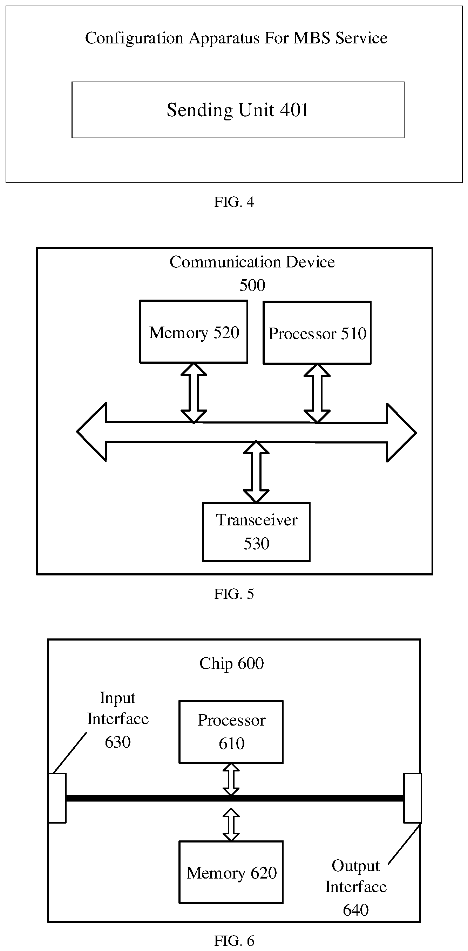

FIG. 4 is another structural schematic diagram of a configuration apparatus for the MBS service according to an embodiment of the present disclosure, which is applied to a network device. As shown in FIG. 4, the configuration apparatus for the MBS service includes the following.

A sending unit 401 is configured to send the configuration information of the MBS service to the terminal device. The MBS service is transmitted in a multicasting. The configuration information of the MBS service is configured to determine at least one of the following cases.

Whether the terminal device is capable of receiving the MBS service when the terminal device is in a state of RRC_IDLE and/or a state of RRC_INACTIVE;

Whether the terminal device needs to implement the feedback on the MBS service, and the feedback includes at least one of: the HARQ feedback, the RLC feedback, and the PDCP feedback.

In some embodiments, the configuration information of the MBS service includes first indication information configured to indicate at least one of Whether the terminal device is capable of receiving the MBS service when the terminal device is in a state of RRC_IDLE and/or a state of RRC_INACTIVE; and whether the terminal device needs to implement the feedback on the MBS service, and the feedback includes at least one of: the HARQ feedback, the RLC feedback, and the PDCP feedback.

In some embodiments, if the configuration information of the MBS service does not include second indication information, the terminal device is not capable of receiving the MBS service when the terminal device is in a state of RRC_IDLE and/or a state of RRC_INACTIVE; and/or, the terminal device does not need to perform the feedback for the MBS service.

If the configuration information of the MBS service includes the second indication information, the terminal device is capable of receiving the MBS service when the terminal device is in the state of RRC_IDLE and/or the state of RRC_INACTIVE; and/or, the terminal device needs to implement the feedback on the MBS service.

The second indication information is configured to indicate a feedback resource of the MBS service, and the feedback includes at least one of: the HARQ feedback, the RLC feedback, and the PDCP feedback.

In some embodiments, the configuration information of the MBS service includes second indication information configured to indicate the feedback resource of the MBS service. The feedback resource is configured for the terminal device to transmit the feedback information of the MBS service when in the state of RRC_CONNECTED, the state of RRC_INACTIVE, or the state of RRC_IDLE.

In some embodiments, the feedback resource is a first PUCCH resource of the at least one PUCCH resource.

In some embodiments, each of the at least one PUCCH resource has an index, and the second indication information is an index of the first PUCCH resource.

In some embodiments, the at least one PUCCH resource is at least one PUCCH resource on the uplink common BWP. Alternatively, the at least one PUCCH resource is at least one PUCCH resource on the uplink dedicated BWP.

In some embodiments, the at least one PUCCH resource is at least one PUCCH resource on the uplink initial BWP.

In some embodiments, the configuration information of the at least one PUCCH resource is carried in the system broadcast information or the MCCH signaling.

In some embodiments, the configuration information of the MBS service is carried in the first RRC dedicated signaling.

In some embodiments, the sending unit 401 is further configured to send third indication information to the terminal device, and the third indication information is configured to indicate the terminal device to receive a first serving cell and/or the first BWP used by the MBS service after the terminal device enters the state of RRC_IDLE or the state of RRC_INACTIVE.

In some embodiments, the third indication information includes an index of the first serving cell and/or the index of the first BWP.

In some embodiments, the first serving cell indicated by the third indication information is the same as a cell in which the terminal device receives the MBS service when in the state of RRC_CONNECTED. Alternatively, the first serving cell indicated by the third indication information is different from a cell in which the terminal device receives the MBS service when in the state of RRC_CONNECTED.

In some embodiments, the first BWP indicated by the third indication information is the same as the BWP used by the terminal device to receive the MBS service when the terminal device is in the state of RRC_CONNECTED. Alternatively, the first BWP indicated by the third indication information is different from BWP used by the terminal device to receive the MBS service when the terminal device is in the state of RRC_CONNECTED.

It should be understood by those skilled in the art that, the relevant description of configuration apparatus for the MBS service in the embodiments of the present disclosure may refer to the relevant description of the configuration method of the MBS service in the embodiments of the present disclosure.

FIG. 5 is a structural schematic diagram of a communication device 500 according to an embodiment of the present disclosure. A communication device may be a terminal device or a network device. The communication device 500 shown in FIG. 5 includes a processor 510 configured for calling and performing the computer program stored in a memory to execute the method in the embodiments of the present disclosure.

In some embodiments, as shown in FIG 5, the communication device 500 may further include a memory 520. The processor 510 may be configured for calling and performing the computer program stored in the memory 520 to execute the method in the embodiments of the present disclosure.

The memory 520 may be a separate device from the processor 510 or may be integrated into the processor 510.

In some embodiments, as shown in FIG 5, the communication device 500 may further include a transceiver 530. The processor 510 may control the transceiver 530 to communicate with other devices, specifically, to send information or data to, or receive information or data from, the other devices.

The transceiver 530 may include a transmitter and a receiver. The transceiver 530 may further include an antenna, and the number of antennas may be one or more.

In some embodiments, the communication device 500 may specifically be the network device of the embodiments of the present disclosure, and the communication device 500 may implement the corresponding processes implemented by the network device in the various method embodiments of the present disclosure, which will not be repeated herein for brevity.

In some embodiments, the communication device 500 may be a mobile terminal/terminal device of the embodiments of the present disclosure, and the communication device 500 may implement the corresponding processes implemented by the mobile terminal/terminal device in the various method embodiments of the present disclosure, which will not be repeated herein for brevity.

FIG. 6 is a structural schematic diagram of a chip according to an embodiment of the present disclosure. A chip 600 shown in FIG. 6 includes a processor 610 configured for calling and performing the computer program stored in a memory to execute the method in the embodiments of the present disclosure.

In some embodiments, as shown in FIG 6, the chip 600 may also include a memory 620. The processor 610 may be configured for calling and performing the computer program stored in the memory 620 to execute the method in the embodiments of the present disclosure.

The memory 620 may be a separate device from the processor 610 or may be integrated into the processor 610.

In some embodiments, the chip 600 may further include an input interface 630. The processor 610 may control the input interface 630 to communicate with other devices or chips, specifically, to obtain information or data sent by the other devices or chips.

In some embodiments, the chip 600 may further include an output interface 640. The processor 610 may control the output interface 640 to communicate with other devices or chips, specifically, to output information or data to the other devices or chips.

In some embodiments, the chip may be may be applied to the network device in embodiments of the present disclosure, and may implement the corresponding processes implemented by the network device in the various method embodiments of the present disclosure, which will not be repeated herein for brevity.

In some embodiments, the chip may be applied to the mobile terminal/terminal device in the embodiments of the present disclosure, and may implement the corresponding processes implemented by the mobile terminal/terminal device in the various method embodiments of the present disclosure, which will not be described herein for brevity.

It should be understood that the chip in embodiments of the present disclosure may also be referred as a system-level chip, a system chip, a chip system or a system-on chip, etc.

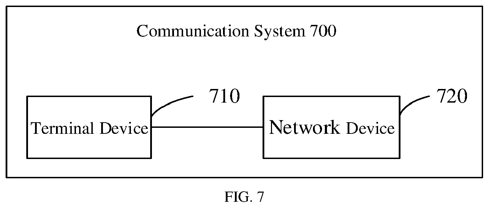

FIG. 7 is a schematic block diagram of a communication system 700 according to embodiments of the present disclosure. As shown in FIG. 7, the communication system 700 includes a terminal device 710 and a network device 720.

The terminal device 710 may be configured to implement the corresponding functions implemented by the terminal device in the method described above, and the network device 720 may be configured to implement the corresponding functions implemented by the network device in the method described above, which will not be described herein for brevity.

It should be understood that the processor of the embodiments of the present disclosure may be an integrated circuit chip having the processing capability of signals. In the process of implementation, the steps of the above method embodiments may be accomplished by integrated logic circuitry in the hardware of the processor or instructions in the form of software. The above processor may be a general-purpose processor, a digital signal processor (DSP), an application specific integrated circuit (ASIC), a field programmable gate array (FPGA) or other programmable logic device, discrete gate or transistor logic device, or discrete hardware component. The respective methods, steps, and logic block diagrams in the embodiments of the present disclosure may be implemented or performed. The general-purpose processor may be a microprocessor or the processor may also be any conventional processor, etc. The steps of the method disclosed in conjunction with the embodiments of the present disclosure may be directly embodied as performed by the hardware decode processor or performed with a combination of hardware and software modules in the decode processor. The software module may be in random memory, flash memory, read-only memory, programmable read-only memory or electrically rewritable programmable memory, registers, and other storage medium well established in the art. The storage medium is in the memory and the processor reads information in the memory and completes the steps of the above method in combination with the hardware.

It may be understood that the memory in embodiments of the present disclosure may be volatile memory or non-volatile memory or may include both volatile and non-volatile memory. Among them, the non-volatile memory may be read-only memory (ROM), programmable ROM (PROM), erasable PROM (EPROM), electrically EPROM (EEPROM), or flash memory. The volatile memory may be random access memory (RAM), which is used as an external cache. By way of illustration, but not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct Rambus RAM (DR RAM). It should be noted that, the memory of the systems and methods described herein are intended to include, but are not limited to, these and any other suitable types of memories.

It should be understood that the above memories are exemplary but not limiting descriptions, for example, the memory in the embodiments of the present disclosure may also be static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), and direct Rambus RAM (DR RAM), etc. That is, the memory in the embodiments of the present disclosure is intended to include, but is not limited to, these and any other suitable types of memories.

Embodiments of the present disclosure further provide a computer-readable storage medium for storing a computer program.

In some embodiments, the computer-readable storage medium may be applied to the network device in the embodiments of the present disclosure, and the computer program causes the computer to perform the corresponding processes implemented by the network device in the various method embodiments of the present disclosure, which will not be described herein for brevity.

In some embodiments, the computer-readable storage medium may be applied to the mobile terminal/terminal device in the embodiments of the present disclosure, and the computer program causes the computer to perform the corresponding processes implemented by the mobile terminal/terminal device in the various method embodiments of the present disclosure, which will not be repeated herein for the sake of brevity.

Embodiments of the present disclosure further provide a computer program product including a computer program instruction.

In some embodiments, the computer program product may be applied to the network device in the embodiments of the present disclosure, and the computer program instruction causes the computer to perform the corresponding processes implemented by the network device in the respective method embodiments of the present disclosure, which will not be repeated herein for brevity.

In some embodiments, the computer program product may be applied to the mobile terminal/terminal device in the embodiments of the present disclosure, and the computer program instruction causes the computer to perform the corresponding processes implemented by the mobile terminal/terminal device in various method embodiments of the present disclosure, which will not be repeated herein for the sake of brevity.

Embodiments of the present disclosure further provide a computer program.

In some embodiments, the computer program may be applied to the network device in the embodiments of the present disclosure, and when the computer program is executed on the computer, the computer program causes the computer to perform the corresponding processes implemented by the network device in various method embodiments of the present disclosure, which will not be repeated herein for brevity.

In some embodiments, the computer program may be applied to the mobile terminal/terminal device in the embodiments of the present disclosure, and when the computer program is executed on the computer, the computer program causes the computer to perform the corresponding processes implemented by the mobile terminal/terminal device in the various method embodiments of the present disclosure, which will not be repeated herein for brevity.

Those skilled in the art can realize that the units and algorithmic steps of each example described in conjunction with the embodiments disclosed herein are capable of being implemented as electronic hardware, or a combination of computer software and electronic hardware. Whether these functions are performed in hardware or software depends on particular applications and design constraints of the technical solution. Those skilled in the art may use different methods to implement the described functions for each particular application, but such implementations should not be considered outside the scope of the present disclosure.

It will be clear to those skilled in the art that for the convenience and brevity of the description, the specific working processes of the systems, devices and units described above can be referred to the corresponding processes in the preceding method embodiments and will not be repeated herein.

In several embodiments provided by the present disclosure, it should be understood that the disclosed systems, devices, and methods, may be implemented in other ways. For example, the embodiments of the devices described above are merely schematic, for example, the division of the units described, which is only a logical functional division, may be divided in other ways when implemented; for example, multiple units or components may be combined or integrated into another system, or some features may be ignored, or not implemented. In addition, the mutual coupling or direct coupling or communication connections shown or discussed may be indirect coupling or communication connections through some interface, device or unit, which may be electrical, mechanical or other forms.

The units illustrated as separate components may or may not be physically separated, and components shown as units may or may not be physical units, i.e., they may be located in one place or may be distributed to a plurality of network units. Some or all of these units may be selected according to practical needs to achieve the purpose of the present disclosure.

In addition, each functional unit in each embodiment of the present disclosure may be integrated in a single processing unit, or each unit may be physically present separately, or two or more units may be integrated in a single unit.

The functions, when implemented as a software functional unit and sold or used as a separate product, may be stored in a computer-readable storage medium. It is understood that the technical solution of the present disclosure, or that part of the technical solution that essentially contributes to the prior art, may be embodied in the form of a software product that is stored in a storage medium and includes a number of instructions to cause a computer device (which may be a personal computer, server, or network device, etc.) to perform all or some of the steps of the method described in various embodiments of the present disclosure. The storage medium includes USB flash drive, removable hard disk, read-only memory (ROM), random access memory (RAM), disk or CD-ROM, and other medium that may store program code.

The foregoing is only a specific implementation of the present disclosure, but the scope of the present disclosure is not limited thereto, and any changes or substitutions that can be readily thought of by those skilled in the art within the scope of the technology disclosed in the present disclosure shall be covered by the scope of the present disclosure. Therefore, the scope of the present disclosure shall be stated to be subject to the scope of the claims.

## Claims

1. A configuration method for a multicast broadcast service (MBS) service, comprising:
receiving, by a terminal device, configuration information of the MBS service, the MBS service being transmitted in a multicasting;
wherein the configuration information of the MBS service is configured to determine at least one of:
whether the terminal device is capable of receiving the MBS service when the terminal device is in a state of radio resource control (RRC)_IDLE and/or in a state of RRC_INACTIVE;
whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

2. The method as claimed in claim 1, wherein the configuration information of the MBS service comprises first indication information, configured to indicate at least one of:
whether the terminal device is capable of receiving the MBS service when the terminal device is in a state of RRC_IDLE and/or in a state of RRC_INACTIVE;
whether the terminal device needs to perform the feedback for the MBS service, wherein the feedback comprises at least one of the HARQ feedback, the RLC feedback, and the PDCP feedback.

3. The method as claimed in claim 1, further comprising:
determining, by the terminal device, at least one of the following, in response to the configuration information of the MBS service not comprising second indication information:
the terminal device not being capable of receiving the MBS service when the terminal device is in a state of RRC_IDLE and/or in a state of RRC_INACTIVE; and
the terminal device not needing to perform the feedback for the MBS service; and
determining, by the terminal device, at least one of the following, in response to the configuration information of the MBS service comprising the second indication information:
the terminal device being capable of receiving the MBS service when the terminal device is in a state of radio resource control (RRC)_IDLE and/or in a state of RRC_INACTIVE; and
the terminal device needing to perform the feedback for the MBS service;
wherein the second indication information is configured to indicate a feedback resource of the MBS service, and the feedback comprises at least one of the HARQ feedback, the RLC feedback, and the PDCP feedback.

4. The method as claimed in any one of claims 1 to 3, wherein the configuration information of the MBS service comprises second indication information, configured to indicate a feedback resource of the MBS service, wherein the feedback resource is configured for the terminal device to transmit feedback information of the MBS service when the terminal device is in a state of RRC_CONNECTED, in a state of RRC_INACTIVE, or in a state of RRC_IDLE.

5. The method as claimed in claim 4, wherein the feedback resource is a first PUCCH resource of at least one physical uplink control channel (PUCCH) resource.

6. The method as claimed in claim 5, wherein each of the at least one PUCCH resource has an index, and the second indication information is an index of the first PUCCH resource.

7. The method as claimed in claim 5 or 6, wherein the at least one PUCCH resource is at least one PUCCH resource on an uplink common band width part (BWP); or
the at least one PUCCH resource is at least one PUCCH resource on an uplink dedicated BWP.

8. The method as claimed in claim 5 or 6, wherein the at least one PUCCH resource is at least one PUCCH resource on an uplink initial BWP.

9. The method as claimed in claim 8, wherein configuration information of the at least one PUCCH resource is carried in system broadcast information or in a multicast control channel (MCCH) signaling.

10. The method as claimed in any one of claims 1 to 9, wherein the configuration information of the MBS service is carried in a first RRC dedicated signaling.

11. The method as claimed in any one of claims 1-10, further comprising:
receiving, by the terminal device, third indication information, the third indication information being configured to indicate the terminal device to receive a first serving cell and/or a first BWP used by the MBS service after the terminal device enters a state of RRC_IDLE_IDLE or a state of RRC_INACTIVE.

12. The method as claimed in claim 11, wherein the third indication information comprises an index of the first serving cell and/or an index of the first BWP.

13. The method according to claim 11 or 12, wherein the first serving cell indicated by the third indication information is the same as a cell in which the terminal device receives the MBS service when the terminal device is in a state of RRC_CONNECTED; or
the first serving cell indicated by the third indication information is different from the cell in which the terminal device receives the MBS service when the terminal device is in the state of RRC_CONNECTED.

14. The method as claimed in any one of claims 11 to 13, wherein the first BWP indicated by the third indication information is the same as a BWP used by the terminal device to receive the MBS service when the terminal device is in a state of RRC_CONNECTED; or
the first BWP indicated by the third indication information is different from the BWP used by the terminal device to receive the MBS service when the terminal device is in the state of RRC_CONNECTED.

15. The method as claimed in any one of claims 11-14, wherein the third indication information is carried in a second RRC dedicated signaling.

16. The method as claimed in any one of claims 1 to 15, wherein in response to the terminal device receiving the MBS service after entering the state of RRC_IDLE_IDLE or the state of RRC_INACTIVE,
all secondary cells (SCells) are in a deactivated state, a suspended state, a stored state, or a released state, the all SCells comprising SCells at a master cell group (MCG) and/or SCells at a secondary cell group (SCG); or
all cells at the SCG are in the deactivated state, the suspended state, the stored state, or the released state, the all cells at the SCG comprising a primary and secondary cell (PSCell) and a SCell at the SCG.

17. The method as claimed in any one of claims 1 to 15, wherein in response to the terminal device receiving the MBS service after entering the state of RRC_IDLE or the state of RRC_INACTIVE,
a cell configured with a MBS resource is in an active state, and a cell configured with no MBS resource is in a deactivated state, a suspended state, a stored state, or a released state;
wherein the MBS resource comprises a service resource for transmitting the MBS service and/or a feedback resource for transmitting feedback information of the MBS service.

18. The method as claimed in any one of claims 1 to 17, further comprising:
continuing to monitor, by the terminal device, a MBS physical downlink control channel (PDCCH) after the terminal device enters the state of RRC_IDLE_IDLE or the state of RRC_INACTIVE, in response to the terminal device determining that the terminal device is capable of receiving the MBS service when the terminal device is in the state of RRC_IDLE or the state of RRC_INACTIVE, based on the configuration information of the MBS service;
wherein the MBS PDCCH carries scheduling information of a MBS physical downlink shared channel (PDSCH), and the MBS PDSCH is configured for transmitting the MSB service.

19. The method as claimed in claim 18, wherein the MBS PDCCH is scrambled by a group radio network temporary identifier (G-RNTI); or
the MBS PDCCH is scrambled by a cell radio network temporary identifier (C-RNTI).

20. A configuration method for a multicast broadcast service (MBS) service, comprising:
sending, by a network device, configuration information of the MBS service to a terminal device, the MBS service being transmitted in a multicasting;
wherein the configuration information of the MBS service is configured to determine at least one of:
whether the terminal device is capable of receiving the MBS service when the terminal device is in a state of radio resource control (RRC) IDLE and/or in a state of RRC_INACTIVE;
whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

21. The method as claimed in claim 20, wherein the configuration information of the MBS service comprises first indication information, configured to indicate at least one of:
whether the terminal device is capable of receiving the MBS service when the terminal device is in a state of radio resource control (RRC)_IDLE and/or in the state of RRC_INACTIVE;
whether the terminal device needs to perform a feedback for the MBS service, wherein the feedback comprises at least one of the HARQ feedback, the RLC feedback, and the PDCP feedback.

22. The method as claimed in claim 20, wherein the terminal device is not capable of receiving the MBS service when the terminal device is in a state of radio resource control (RRC)_IDLE and/or in a state of RRC_INACTIVE; and/or the terminal device does not need to perform the feedback for the MBS service, in response to the configuration information of the MBS service not comprising second indication information;
the terminal device is capable of receiving the MBS service when the terminal device is in a state of radio resource control (RRC)_IDLE and/or in a state of RRC_INACTIVE; and/or the terminal device needs to perform the feedback for the MBS service, in response to the configuration information of the MBS service comprising the second indication information;
wherein the second indication information is configured to indicate a feedback resource of the MBS service, and the feedback comprises at least one of the HARQ feedback, the RLC feedback, and the PDCP feedback.

23. The method as claimed in any one of claims 20 to 22, wherein the configuration information of the MBS service comprises second indication information, configured to indicate a feedback resource of the MBS service, wherein the feedback resource is configured for the terminal device to transmit feedback information of the MBS service when the terminal device is in a state of RRC_CONNECTED, a state of RRC_INACTIVE, or a state of RRC_IDLE.

24. The method as claimed in claim 23, wherein the feedback resource is a first PUCCH resource of at least one physical uplink control channel (PUCCH) resource.

25. The method as claimed in claim 24, wherein each of the at least one PUCCH resource has an index, and the second indication information is an index of the first PUCCH resource.

26. The method as claimed in claim 24 or 25, wherein the at least one PUCCH resource is at least one PUCCH resource on an uplink common band width part (BWP); or
the at least one PUCCH resource is at least one PUCCH resource on an uplink dedicated BWP.

27. The method as claimed in claim 24 or 25, wherein the at least one PUCCH resource is at least one PUCCH resource on an uplink initial BWP.

28. The method as claimed in claim 27, wherein configuration information of the at least one PUCCH resource is carried in system broadcast information or in a multicast control channel (MCCH) signaling.

29. The method as claimed in any one of claims 20 to 28, wherein the configuration information of the MBS service is carried in a first RRC dedicated signaling.

30. The method as claimed in any one of claims 20-29, further comprising:
sending, by the terminal device, third indication information, the third indication information being configured to indicate the terminal device to receive a first serving cell and/or a first BWP used by the MBS service after the terminal device enters the state of RRC_IDLE or the state of RRC_INACTIVE.

31. The method as claimed in claim 30, wherein the third indication information comprises an index of the first serving cell and/or an index of the first BWP.

32. The method as claimed in claim 30 or 31, wherein the first serving cell indicated by the third indication information is the same as a cell in which the terminal device receives the MBS service in the state of RRC_CONNECTED; or
the first serving cell indicated by the third indication information is different from a cell in which the terminal device receives the MBS service in the state of RRC_CONNECTED.

33. The method as claimed in any one of claims 30 to 32, wherein the first BWP indicated by the third indication information is the same as a BWP used by the terminal device to receive the MBS service when the terminal device is in a state of RRC_CONNECTED; or
the first BWP indicated by the third indication information is different from the BWP used by the terminal device to receive the MBS service when the terminal device is in a state of RRC_CONNECTED.

34. The method as claimed in any one of claims 30 to 33, wherein the third indication information is carried in a second RRC dedicated signaling.

35. A configuration apparatus for a multicast broadcast service (MBS) service, applied to a terminal device and comprising:
a receiving unit, configured to receive configuration information of the MBS service, the MBS service being transmitted in a multicasting;
wherein the configuration information of the MBS service is configured to determine at least one of:
whether the terminal device is capable of receiving the MBS service when the terminal device is in a state of radio resource control (RRC)_IDLE and/or in a state of RRC_INACTIVE;
whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

36. The apparatus as claimed in claim 35, wherein the configuration information of the MBS service comprises first indication information, configured to indicate at least one of:
whether the terminal device is capable of receiving the MBS service when the terminal device is in a state of RRC_IDLE and/or in a state of RRC_INACTIVE;
whether the terminal device needs to perform a feedback for the MBS service, wherein the feedback comprises at least one of the HARQ feedback, the RLC feedback, and the PDCP feedback.

37. The apparatus as claimed in claim 35, further comprising:
a determining unit, configured to:
determine at least one of the following, in response to the configuration information of the MBS service not comprising second indication information:
the terminal device not being capable of receiving the MBS service when the terminal device is in a state of RRC_IDLE and/or in a state of RRC_INACTIVE; and
the terminal device not needing to perform the feedback for the MBS service; and
determine at least one of the following, in response to the configuration information of the MBS service comprising the second indication information:
the terminal device being capable of receiving the MBS service when the terminal device is in the state of RRC_IDLE and/or in the state of RRC_INACTIVE; and
the terminal device needing to perform the feedback for the MBS service;
wherein the second indication information is configured to indicate a feedback resource of the MBS service, and the feedback comprises at least one of the HARQ feedback, the RLC feedback, and the PDCP feedback.

38. The apparatus as claimed in any one of claims 35 to 37, wherein the configuration information of the MBS service comprises second indication information, configured to indicate a feedback resource of the MBS service, wherein the feedback resource is configured for the terminal device to transmit feedback information of the MBS service when the terminal device is in a state of RRC_CONNECTED, the state of RRC_INACTIVE, or the state of RRC_IDLE.

39. The apparatus as claimed in claim 38, wherein the feedback resource is a first PUCCH resource of at least one physical uplink control channel (PUCCH) resource.

40. The apparatus as claimed in claim 39, wherein each of the at least one PUCCH resource has an index, and the second indication information is an index of the first PUCCH resource.

41. The apparatus as claimed in claim 39 or 40, wherein the at least one PUCCH resource is at least one PUCCH resource on an uplink common band width part (BWP); or
the at least one PUCCH resource is at least one PUCCH resource on an uplink dedicated BWP

42. The apparatus as claimed in claim 39 or 40, wherein the at least one PUCCH resource is at least one PUCCH resource on an uplink initial BWP.

43. The apparatus as claimed in claim 42, wherein configuration information of the at least one PUCCH resource is carried in system broadcast information or in a multicast control channel (MCCH) signaling.

44. The apparatus as claimed in any one of claims 35 to 43, wherein the configuration information of the MBS service is carried in a first RRC dedicated signaling.

45. The apparatus as claimed in any one of claims 35 to 44, wherein the receiving unit is further configured to receive third indication information, the third indication information being configured to indicate the terminal device to receive a first serving cell and/or a first BWP used by the MBS service after the terminal device enters a state of RRC_IDLE or a state of RRC_INACTIVE.

46. The apparatus as claimed in claim 45, wherein the third indication information comprises an index of the first serving cell and/or an index of the first BWP.

47. The apparatus as claimed in claim 45 or 46, wherein the first serving cell indicated by the third indication information is the same as a cell in which the terminal device receives the MBS service in a state of RRC_CONNECTED; or
the first serving cell indicated by the third indication information is different from a cell in which the terminal device receives the MBS service in the state of RRC_CONNECTED.

48. The apparatus as claimed in any one of claims 45 to 47, wherein the first BWP indicated by the third indication information is the same as a BWP used by the terminal device to receive the MBS service when the terminal device is in a state of RRC_CONNECTED; or
the first BWP indicated by the third indication information is different from the BWP used by the terminal device to receive the MBS service when the terminal device is in the state of RRC_CONNECTED.

49. The apparatus as claimed in any one of claims 45 to 48, wherein the third indication information is carried in a second RRC dedicated signaling.

50. The apparatus as claimed in any one of claims 35 to 49, wherein in response to the terminal device receiving the MBS service after entering the state of RRC_IDLE or the state of RRC_INACTIVE,
all secondary cells (SCells) are in a deactivated state, a suspended state, a stored state, or a released state, the all SCells comprising SCells at a master cell group (MCG) and/or the SCells at a secondary cell group (SCG); or
all cells at the SCG are in the deactivated state, the suspended state, the stored state, or the released state, the all cells at the SCG comprising a primary and secondary cell (PSCell) and a SCell at the SCG.

51. The apparatus as claimed in any one of claims 35 to 49, wherein in response to the terminal device receiving the MBS service after entering the state of RRC_IDLE or the state of RRC_INACTIVE,
a cell configured with a MBS resource is in an active state, and a cell configured with no MBS resource is in a deactivated state, a suspended state, a stored state, or a released state;
wherein the MBS resource comprises a service resource for transmitting the MBS service and/or a feedback resource for transmitting feedback information of the MBS service.

52. The apparatus as claimed in any one of claims 35 to 51, wherein the apparatus further comprises:
a monitoring unit, configured to continue to monitor a MBS physical downlink control channel (PDCCH) after the terminal device enters the state of RRC_IDLE or the state of RRC_INACTIVE, in response to the terminal device determining that the terminal device is capable of receiving the MBS service when the terminal device is in the state of RRC_IDLE or the state of RRC_INACTIVE, based on the configuration information of the MBS service;
wherein the MBS PDCCH carries scheduling information of a MBS physical downlink shared channel (PDSCH), and the MBS PDSCH is configured for transmitting the MSB service.

53. The apparatus as claimed in claim 52, wherein the MBS PDCCH is scrambled by a group radio network temporary identifier (G-RNTI); or
the MBS PDCCH is scrambled by a cell radio network temporary identifier (C-RNTI).

54. A configuration apparatus for a multicast broadcast service (MBS) service, applied to a network device and comprising:
a sending unit, configured to send configuration information of the MBS service to a terminal device, the MBS service being transmitted in a multicasting,
wherein the configuration information of the MBS service is configured to determine at least one of:
whether the terminal device is capable of receiving the MBS service when the terminal device is in a state of radio resource control (RRC)_IDLE and/or in a state of RRC_INACTIVE;
whether the terminal device needs to perform a feedback for the MBS service, wherein the feedback comprises at least one of: a hybrid automatic repeat request (HARQ) feedback, a radio link control (RLC) feedback, and a packet data convergence protocol (PDCP) feedback.

55. The apparatus as claimed in claim 54, wherein the configuration information of the MBS service comprises first indication information, configured to indicate at least one of:
whether the terminal device is capable of receiving the MBS service when the terminal device is in the state of RRC_IDLE and/or in the state of RRC_INACTIVE;
whether the terminal device needs to perform a feedback for the MBS service, wherein the feedback comprises at least one of the HARQ feedback, the RLC feedback, and the PDCP feedback.

56. The apparatus as claimed in claim 54, wherein the terminal device is not capable of receiving the MBS service when the terminal device is in the state of RRC_IDLE and/or in the state of RRC_INACTIVE; and/or the terminal device does not need to perform the feedback for the MBS service, in response to the configuration information of the MBS service not comprising second indication information;
the terminal device is capable of receiving the MBS service when the terminal device is in the state of RRC_IDLE and/or in the state of RRC_INACTIVE; and/or the terminal device needs to perform the feedback for the MBS service, in response to the configuration information of the MBS service comprising second indication information;
wherein the second indication information is configured to indicate a feedback resource of the MBS service, and the feedback comprises at least one of the HARQ feedback, the RLC feedback, and the PDCP feedback.

57. The apparatus as claimed in any one of claims 54-56, wherein the configuration information of the MBS service comprises second indication information, configured to indicate a feedback resource of the MBS service, wherein the feedback resource is configured for the terminal device to transmit feedback information of the MBS service when the terminal device is in a state of RRC_CONNECTED, the state of RRC_INACTIVE, or the state of RRC_IDLE.

58. The apparatus as claimed in claim 57, wherein the feedback resource is a first PUCCH resource of at least one physical uplink control channel (PUCCH) resource.

59. The apparatus as claimed in claim 58, wherein each of the at least one PUCCH resource has an index, and the second indication information is an index of the first PUCCH resource.

60. The apparatus as claimed in claim 58 or 59, wherein the at least one PUCCH resource is at least one PUCCH resource on an uplink common band width part (BWP); or
the at least one PUCCH resource is at least one PUCCH resource on an uplink dedicated BWP.

61. The apparatus as claimed in claim 58 or 59, wherein the at least one PUCCH resource is at least one PUCCH resource on an uplink initial BWP.

62. The apparatus as claimed in claim 61, wherein configuration information of the at least one PUCCH resource is carried in system broadcast information or in a multicast control channel (MCCH) signaling.

63. The apparatus as claimed in any one of claims 54 to 62, wherein the configuration information of the MBS service is carried in a first RRC dedicated signaling.

64. The apparatus as claimed in any one of claims 54 to 63, wherein the sending unit is further configured to send third indication information, the third indication information being configured to indicate the terminal device to receive a first serving cell and/or a first BWP used by the MBS service after the terminal device enters the state of RRC_IDLE or the state of RRC_INACTIVE.

65. The apparatus as claimed in claim 64, wherein the third indication information comprises an index of the first serving cell and/or an index of the first BWP

66. The apparatus as claimed in claim 64 or 65, wherein the first serving cell indicated by the third indication information is the same as a cell in which the terminal device receives the MBS service in a state of RRC_CONNECTED; or
the first serving cell indicated by the third indication information is different from a cell in which the terminal device receives the MBS service in the state of RRC_CONNECTED.

67. The apparatus as claimed in any one of claims 64 to 66, wherein the first BWP indicated by the third indication information is the same as a BWP used by the terminal device to receive the MBS service when the terminal device is in a state of RRC_CONNECTED; or
the first BWP indicated by the third indication information is different from the BWP used by the terminal device to receive the MBS service when the terminal device is in the state of RRC_CONNECTED.

68. The apparatus as claimed in any one of claims 64 to 67, wherein the third indication information is carried in a second RRC dedicated signaling.

69. A terminal device, comprising a processor and a memory storing a computer program, the processor being configured for calling and performing the computer program stored in the memory to execute the method as claimed in any one of claims 1 to 19.

70. A network device, comprising a processor and a memory storing a computer program, the processor being configured for calling and performing the computer program stored in the memory to execute the method as claimed in any one of claims 20-34.

71. A chip, comprising: a processor, configured for calling and performing a computer program from a memory, such that a terminal device comprising the chip executes the method as claimed in any one of claims 1 to 19.

72. A chip, comprising: a processor, configured for calling and performing a computer program from a memory, such that a terminal device comprising the chip executes the method as claimed in any one of claims 20 to 34.

73. A computer-readable storage medium, storing a computer program that causes a computer to execute the method as claimed in any one of claims 1 to 19.

74. A computer-readable storage medium, storing a computer program that causes a computer to execute the method as claimed in any one of claims 20 to 34.

75. A computer program product, comprising computer program instructions that cause a computer to execute the method as claimed in any one of 1 to 19.

76. A computer program product, comprising computer program instructions that cause a computer to execute the method as claimed in any one of claims 20 to 34.

77. A computer program, causing a computer to execute the method as claimed in any one of claims 1 to 19.

78. A computer program, causing a computer to execute the method as claimed in any one of claims 20 to 34.
